# EUROPÄISCHE PATENTSCHRIFT

(11) **EP 1 749 568 B1**
(45) Veröffentlichungstag und Bekanntmachung des Hinweises auf die Patenterteilung: **25.03.2009**
(21) Anmeldenummer: 06011411.3
(22) Anmeldetag: 01.06.2006
(51) Int. Cl.: B01J 8/00, B01J 8/06, B65G 69/16

(54) **Vorrichtung zum Befüllen eines Rohres mit partikelförmigem Schüttgut**
Device for loading a tube with particulate material
Dispositif pour le chargement de matériaux en grain dans des tubes

(30) Priorität: 28.07.2005 EP 05016422
(43) Veröffentlichungstag der Anmeldung: 07.02.2007
(60) Teilanmeldung: 08015483.4
(73) Patentinhaber: Cota, Aldo, 85077 Manching (DE)
(72) Erfinder: Cota, Aldo, 85077 Manching (DE); Poussin, Guillaume, 78800 Houilles (FR)
(74) Vertreter: Schweiger, Georg

(56) Entgegenhaltungen:
- EP-A- 0 548 999
- WO-A-20/04096428
- WO-A2-20/06104832
- DE-T- 60 003 526
- US-B1- 6 467 513

## Beschreibung

Die vorliegende Erfindung betrifft eine Vorrichtung zum schonenden und gleichmäßigen Befüllen eines Rohres, wie insbesondere eines Rohrreaktors mit partikelförmigem Schüttgut, wie insbesondere Katalysatorpartikeln; sowie Verfahren zum Befüllen eines Rohres unter Verwendung dieser Gegenstände.

### Hintergrund der Erfindung

Für die Durchführung chemischer Reaktionen in mit Katalysatorpartikeln befüllten Rohrreaktoren ist die Güte der Katalysatorfüllung von großer Bedeutung. Ein homogenes Katalysatorbett gewährleistet eine gleichmäßige Temperaturverteilung im Reaktor. Beim Einfüllen der mechanisch häufig sehr empfindlichen Katalysatorpartikel können aufgrund zu großer mechanischen Krafteinwirkung Partikel zerbrechen oder es kann Katalysatormasse abgerieben werden. Dadurch wird die Katalysatorschüttung verdichtet und führt bei Betrieb des Reaktors zu unerwünschten Druckverlusten. Bei ungleichmäßiger Befüllung besteht außerdem die Gefahr der Ausbildung sogenannter "Hot Spots", d.h. Zonen unerwünscht erhöhter Temperatur im Reaktor, welche die Steuerung des Reaktionsverlaufs beeinträchtigen. Bei der Befüllung von Rohrreaktoren mit Katalysatorpartikeln ist daher besonderes Augenmerk auf die Homogenität der erhaltenen Schüttung zu richten. Dies versucht man durch möglichst schonende Befüllung des Rohres mit den Katalysatorpartikeln zu erreichen.

Aus der EP-A-0 548 999 ist ein Verfahren zum Befüllen von vertikalen Rohren mit partikeiförmigem Material bekannt, bei dem man in das Rohr eine Leine einführt, weiche quer zur Leine angeordnete, radiale Dämpfungsmittel in Form von biegsamen Bürsten trägt, deren radiale Ausdehnung geringer ist als der Halbmesser des Rohres. Diese Bürsten geben stufenweise nach, wenn die Partikel darauf fallen. Die Leine wird während des Befüllens nach oben aus dem Rohr gezogen.

Diese aus dem Stand der Technik bekannte Vorrichtung weist gravierende Nachteile in der Praxis auf. Insbesondere verursacht die radiale Anordnung der geraden, kurzen Borsten des Dämpfungsmittels häufig unerwünschte Störungen während des Füllvorgangs. Das Dämpfungsmittel ist nämlich insbesondere im zentralen Bereich, d.h. nahe an der Leine, aufgrund der hohen Borstendichte für die Katalysatorpartikel nicht durchlässig, so dass insbesondere bei zu hoher Füllgeschwindigkeit weniger Partikel durch das Dämpferelement nach unter austreten als von oben nachgefüllt wird. Dadurch kommt es häufig zu einem Verstopfen des Rohrs, und als Folge davon zu einem Reißen des Trägerseils. Um diese Störung zu beseitigen, muss der Füllvorgang unterbrochen und bereits eingefüllter Katalysator wieder abgesaugt werden, wodurch der gesamte Vorgang unnötig verzögert und die Stillstandszeit der Anlage unnötig verlängert wird. Wenn der Befüllungsvorgang nicht kontinuierlich durchgeführt wird, kann dies außerdem die Homogenität der Partikel-Schüttung beeinträchtigen.

Eine weitere Vorrichtung zum Befüllen von Rohren mit Katalysatorpartikeln wird in der US 6,467,513 beschrieben. Diese umfasst eine mit bürstenförmigen Dämpferelementen versehene Leine, welche sich in einem biegsamen Füllrohr befindet. Die Leine wird zusammen mit dem Füllrohr in den zu befüllenden Reaktor eingeführt und zusammen mit dem Füllrohr aus dem Reaktor während des Füllvorgangs wieder herausgezogen. Insgesamt ist bei einer derartigen Vorrichtung die Handhabung des Füllrohrs während der Befüllung besonders umständlich, und außerdem wird dadurch der Füllvorgang unnötig verlangsamt. Es werden in diesem Dokument außerdem verschiedene Dämpferelemente für diese Vorrichtung beschrieben, insbesondere Bürsten mit radial abweisenden Armen; Bürsten, bei denen zwischen zwei benachbarten Armen zusätzlich metallische Gitterelemente angebracht sind und die somit recht aufwändig konstruiert sind; sowie Vorrichtungen mit blattförmigen, radial angeordneten Armen. Wie die genannten Gitterelemente tatsächlich beschaffen sein sollen und wie diese insbesondere an zwei benachbarten Armen befestigt sein sollen, ohne die Funktion des Dämpferelements zu beeinträchtigen, wird allerdings nicht beschrieben. Die Maschenweite dieser regelmäßig aufgebauten Gitterelemente soll an die Partikelgröße der jeweils verwendeten Katalysatoren anpassbar sein. Jedenfalls ist aber bei derartigen zusätzlichen Gitterelementen deren Herstellung kompliziert und teuer und außerdem wird dadurch die Elastizität derartiger Dämpferelemente insgesamt in unerwünschter Weise herabgesetzt.

Aus der WO 2004/096428 ist eine weitere Vorrichtung zum Befüllen von Rohren mit Katalysatorpartikeln bekannt, wobei an einer zentralen Leine gleichmäßig beabstandete, klammerartig ausgebildete, longitudinale und im wesentlichen starre Falldämpfer asymmetrisch angeklemmt sind und radial und im wesentlichen horizontal nach außen weisen. Die Klammern sind entlang der zentralen Leine axial so angeordnet, dass eine umlaufende Bedeckung des Rohrquerschnitts gewährleistet sein soll. Die einzelnen Falldämpfer bilden keine netzartige Struktur aus. Ohne genauere Angaben zu machen, wird darin außerdem die Möglichkeit erwähnt, am unteren Ende der Leine einen nicht näher beschriebenen Sensor anzubringen, der ein optisches oder akustisches Signal an das obere Ende der Leine übermittelt, sobald das untere Ende in Kontakt mit der Katalysator-Füllung gelangt. Konstruktive Details hierzu fehlen aber völlig. Eine permanente optische Überwachung wird zudem nicht vorgeschlagen. Nachteilig ist hierbei, dass die Vorrichtung beim Befüllen in heftige Drehbewegungen versetzt werden kann, wodurch eine Bedeckung des Rohrquerschnitts mit Dämpferelementen nicht mehr sicher gewährleistet und somit die Falldämpfung nicht optimal ist. Eine homogene Ausbildung des aufgeschütteten Katalysatorbetts ist damit nicht zu erreichen, bei höheren Füllgeschwindigkeit besteht dazu die Gefahr eines Zerbrechens der Katalysatorpartikel und damit die Ausbildung von "Hot-Spots" während des Anlagenbetriebs.

Aufgabe der vorliegenden Erfindung ist daher die Bereitstellung einer Befüllvorrichtung für Rohre, wie Rohrreaktoren, insbesondere solchen mit Durchmessern von 70 bis 300 nm die weniger störanfällig ist und somit ein rascheres, schonendes und gleichmäßiges Befüllen des Rohres mit Schüttgut ermöglicht.

### Kurzfassung der Erfindung

Obige Aufgabe konnte insbesondere durch Bereitstellung einer Füllvorrichtung gelöst werden, die speziell ausgestaltete Falldämpferelemente aufweist, die einerseits die Fallgeschwindigkeit des Schüttguts verringern und andererseits auch bei hoher Füllgeschwindigkeit nicht verstopfen. Überraschenderweise wurde festgestellt, dass bei Verwendung eines lockeren, flexiblen und irregulären Netzgebildes aus einem oder mehreren flexiblen, schlaufenförmiger Netzelementen anstelle radialer, regulär angeordneter, gerader Borsten ein rascheres und trotzdem störungsfreies und schonendes Befüllen eines Rohres mit partikelförmigem Schüttgut möglich wird. Erfindungsgemäß wurde nämlich insbesondere beobachtet, dass die Schüttgutpartikel durch die erfindungsgemäße Ausbildung der Falldämpferelemente während des Füllvorgangs rasch überden Rohrquerschnitt verteilt, bzw. zerstreut werden und durch diese relativ ungeordnete Bewegung einem Verstopfen effektiv vorgebeugt werden kann.

### Figurenbeschreibung

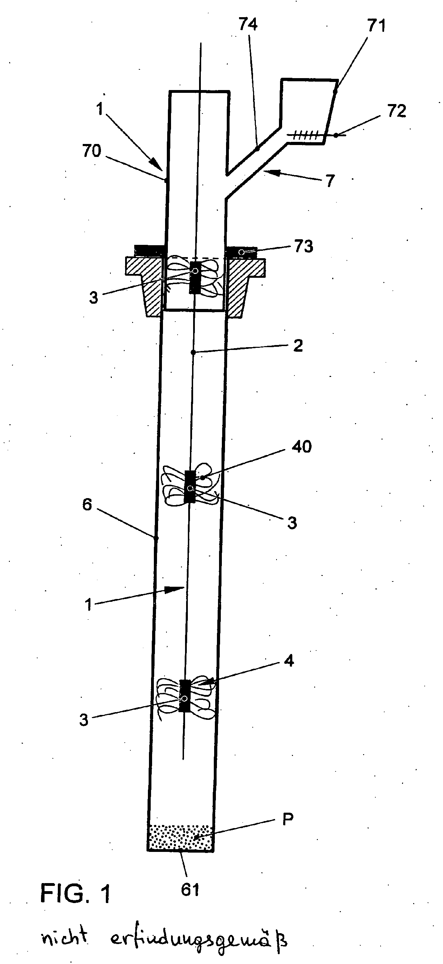

Figur 1 zeigt eine nicht erfindungsgemäße Füllvorrichtung (1) während der Befüllung eines Rohres (6) mit Schüttgutpartikeln (P). Insbesondere umfasst die Vorrichtung (1) drei Falldämpferelemente (3), welche an einem Träger (2) befestigt sind. Jedes Falldämpferelement (3) trägt eine Vielzahl von irregulär angeordneten, gekrümmten Netzelementen (40).

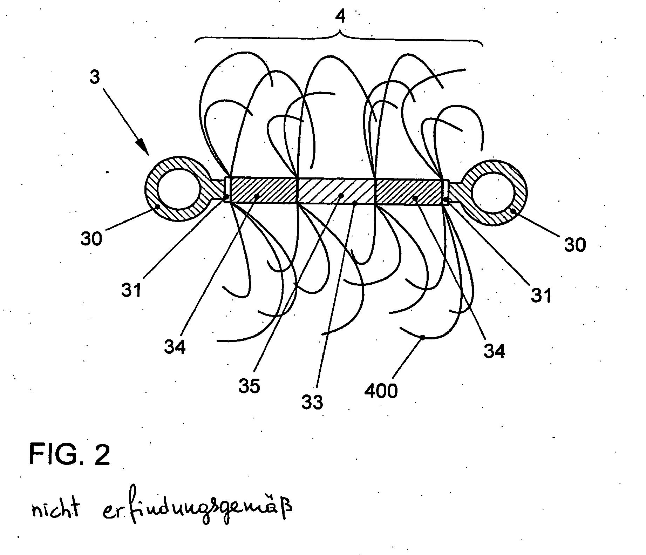

Figur 2 zeigt die Seitenansicht eines nicht erfindungsgemäßen Falldämpferelements (3). Das Falldämpferelement (3) umfasst zwei Ringschrauben (30) zur Befestigung des Falldämpferelements (3) am Träger (2) sowie eine Vielzahl von radial gekrümmten Fasern (400).

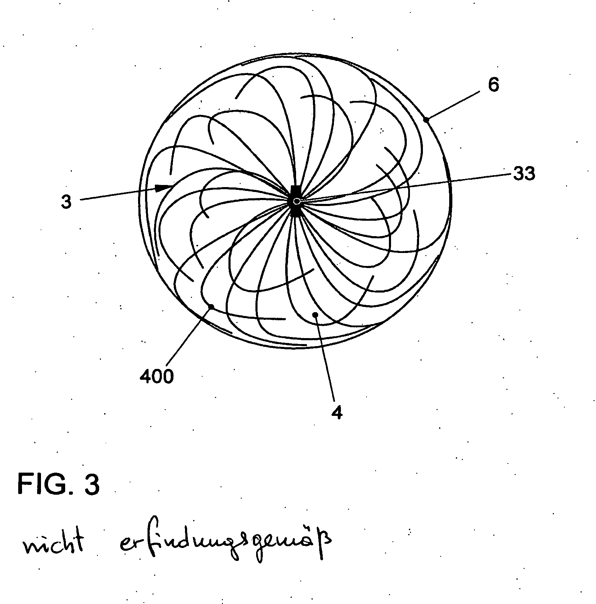

Figur 3 zeigt in der Draufsicht eines nicht-erfindungsgemäßen Falldämpferelements (3) entsprechend Figur 2 mit radial angeordneten, in gleicher Richtung aber unterschiedlich stark gekrümmten Fasern (400) unterschiedlicher Länge, welche eine asymmetrisches offenes Netzgebilde (4) ausbilden.

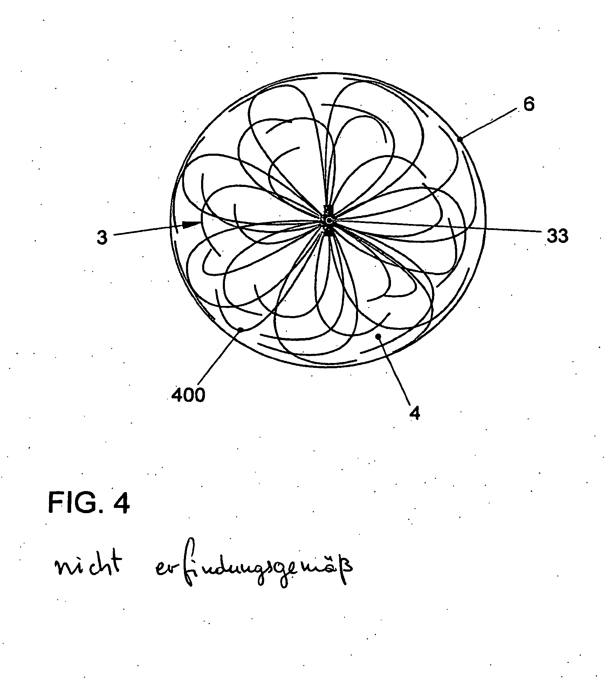

Figur 4 zeigt in der Draufsicht eine alternative Ausgestaltung eines nicht-erfindungsgemässen Falldämpferelements (3) aus Figur 2 mit radial angeordneten, in verschiedenen Richtungen gekrümmten Fasern (400), welche eine asymmetrisches, offenes Netzgebilde (4) ausbilden.

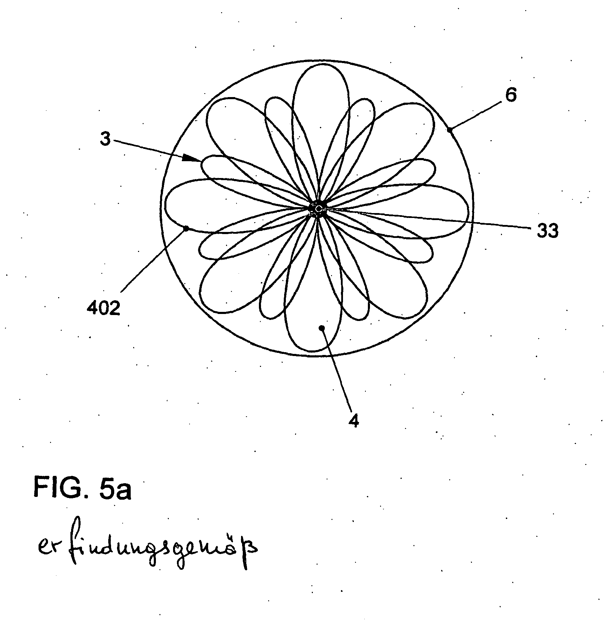

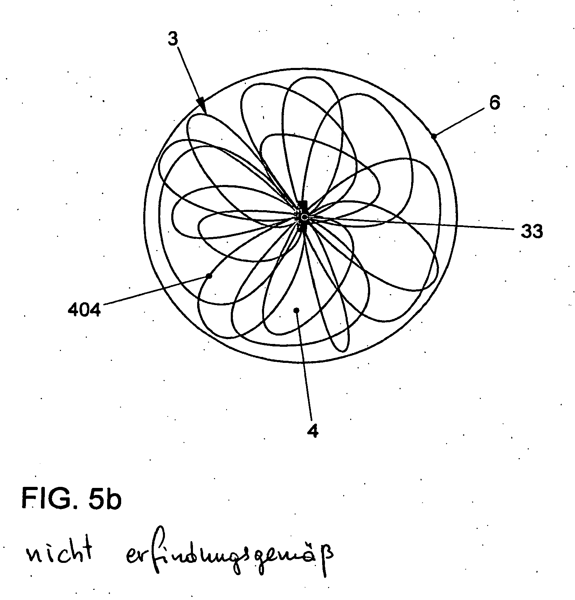

Figur 5a zeigt in der Draufsicht eine erfindungsgemäße Ausgestaltung eines Falldämpferelements (3) aus Figur 2 mit radial angeordneten Schlaufen (402) unterschiedlicher Länge, welche eine asymmetrisches, geschlossenes Netzgebilde (4) ausbilden; Figur 5b zeigt in der Draufsicht eine weitere alternative Ausgestaltung eines nicht-erfindungsgemässen Falldämpferelements (3) aus Figur 5a welches von einem durchgehenden elastischen Faden (404) gebildet wird, der schlaufenartige Segmente ausbildet, indem er abschnittsweise am Korpus (33) befestigt ist. Auch hier wird ein asymmetrisches, geschlossenes Netzgebilde (4) ausgebildet.

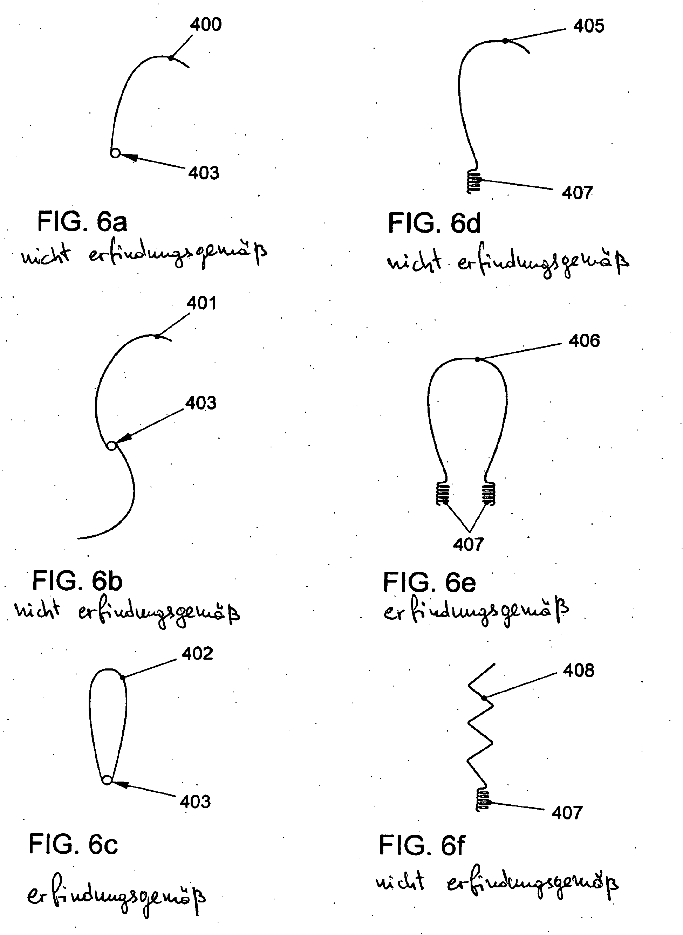

Figur 6 zeigt verschiedene Ausgestaltungen von Netzelementen (40), und zwar a) als radial gekrümmte Einzelfaser (400), b) als radial gekrümmte S-förmige Doppelfasern (401); c) als Schlaufe (402), wobei diese Netzelemente über eine endständige Öse (403) am Falldämpferelement befestigbar sind; die Figuren 6 d) e) und f) zeigen Netzelemente, welche über Federgelenke (407) am Falldämpferelement befestigbar sind, und zwar d) eine Faser (405), e) eine Schlaufe (406) mit zwei endständigen Federgelenken (407) und f) eine mehrfach gekrümmte Zackenfaser (408).
   Die Figuren 6a), b), d) und f) zeigen nicht-erfindungsgemäße Elemente.

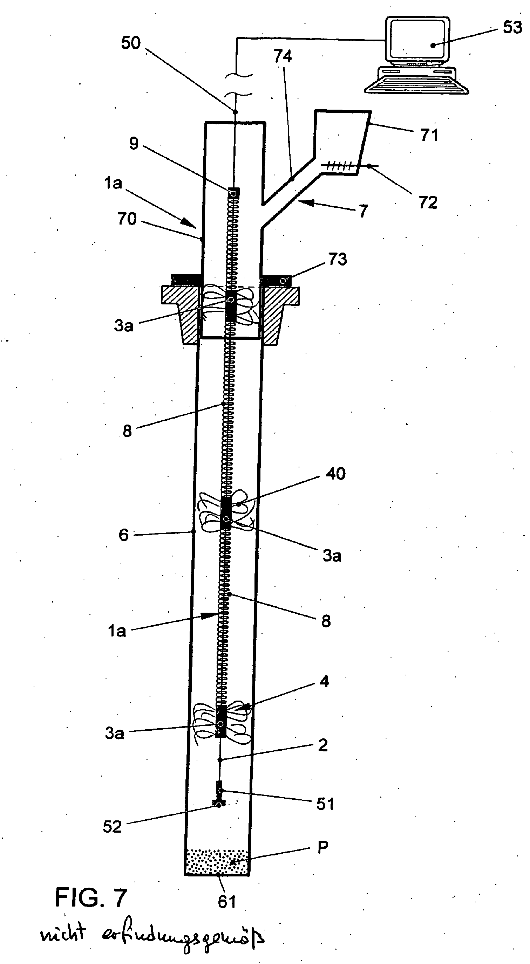

Figur 7 zeigt in schematischer Darstellung eine weitere Ausgestaltung einer in ein Rohr (6) eingesetzte Füllvorrichtung (1a) umfassend einen als Träger dienenden, flexiblen Lichtleiter (50), außerhalb des Rohres (6) verbunden mit einem Monitor (53) und am gegenüberliegenden im Rohr (6) befindlichen Ende ausgestattet mit einer Lichtquelle (52) und einer Linse (51). Die Vorrichtung umfasst drei nicht-erfindungsgemässe Falldämpferelemente (3a) welche durch Spiralfedern (8) miteinander federnd verbunden sind. Eine (hier nicht dargestellte) Abwandlung umfasst eine derartige Füllvorrichtung, bei der die Spiralfedern (8) fehlen und die Falldämpferelemente (3a) am Lichtleiter (50) lösbar befestigt sind.

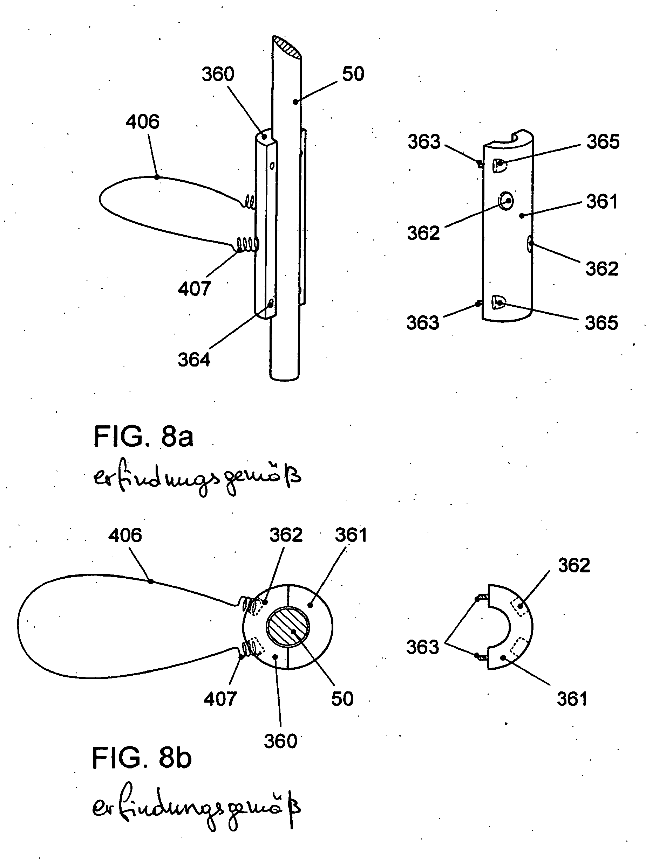

Figur 8 zeigt eine weitere Ausgestaltung erfindungsgemäßer Falldämpferelemente. Die Schlaufen (406) mit Federgelenken (407), werden von einem zweiteiligen hülsenförmigen metallischer Korpus, bestehend aus zwei miteinander verschraubbaren Korpushälften (360,361) getragen. Die Federgelenke sind dabei in seitliche, radial über den Umfang der Korpushälften verteilte Vertiefungen oder Ausnehmungen (362) eingesetzt. Der Innendurchmesser des hülsenförmigen Korpus ist an den Durchmesser des Trägers, hier des Lichtleiters (50), angepasst, so dass bei Verschrauben der beiden Korpushälften, der Korpus am Lichtleiter (50) formschlüssig fixiert wird. Figur 8a) zeigt die perspektivische Ansicht der Anordnung vor dem Verschrauben der beiden Korpushälften (360, 361). Figur 8b) zeigt einen Querschnitt durch den am Lichtleiter (50) verschraubten Korpus.

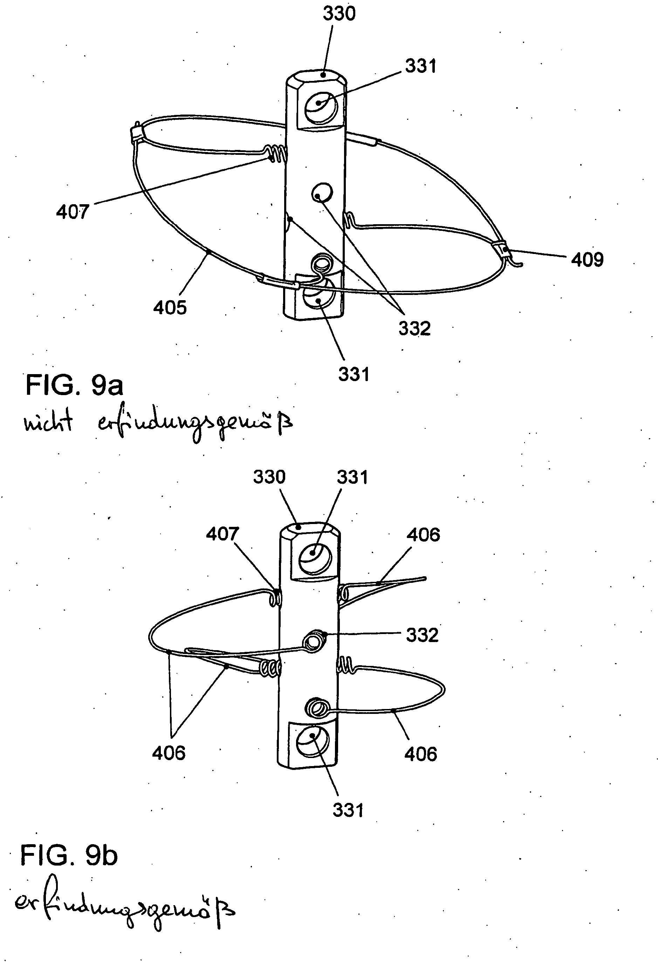

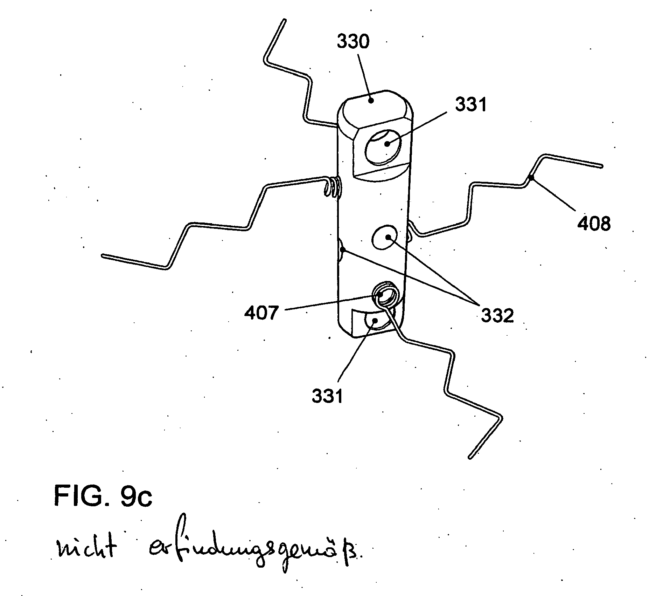

Figur 9 zeigt weitere Ausgestaltungen Falldämpferelemente. Ein einstückiger, metallischer Korpus (330) ist jeweils an seinem oberen und unteren Ende durchbohrt. Über diese Bohrungen (331) ist er mit dem (nicht dargestellten) Trägerverbindbar. Über den gesamten Umfang des mittleren Abschnittes des Korpus (330) sind mehrere Vertiefungen oder Ausnehmungen (332) vorgesehen, welche so ausgebildet sind, dass darin die Netzelemente fixierbar sind. Insbesondere sind hier Vertiefungen (332) vorgesehen, welche die Federgelenkte (407) aufnehmen können. Die Federgelenke (332) ragen noch soweit aus den Vertiefungen (332), dass eine verbesserte Federwirkung gewährleistet ist. Figur 9a) zeigt ein aus vier radial über den Umfang des Korpus (330) verteilte Fasern (405) gebildetes nicht erfindungsgemäßes Falldämpferelement, wobei jedes distale Faserende mit Hilfe einer Verbindung (409) mit einer benachbarten Faser (405) in deren Mittelabschnitt verbunden ist. Falls erforderlich oder gewünscht können in weitere Vertiefungen (332) zusätzliche Fasern eingesetzt werden, um das Netzgebilde engmaschiger auszubilden. Figur 9b) zeigt ein aus vier Schlaufen (406) gebildetes erfindungsgemäßes Falldämpferelement, wobei beide Enden jeder der Schlaufen als Federgelenke (407) ausgebildet sind und in einer von insgesamt acht radial und longitudinal am Korpus (330) verteilten Vertiefungen (332) eingesetzt sind. Figur 9c) zeigt ein aus vier Zackenfasem (408) gebildetes nicht erfindungsgemäßes Falldämpferelement, wobei jeder der Fasern über ein Federgelenk (407) in einervon mehreren radial und longitudinal am Korpus (330) verteilten Vertiefungen (332) eingesetzt ist. Falls erforderlich oder gewünscht können in weitere Vertiefungen (332) zusätzliche Fasern eingesetzt werden, um das Netzgebilde engmaschiger auszubilden.

### Detaillierte Beschreibung der Erfindung

Ein erster Gegenstand der Erfindung ist eine Vorrichtung gemäß Anspruch 1 zum, vorzugsweise vertikalen, Befüllen eines Rohres mit partikelförmigem Schüttgut, umfassend wenigstens ein an einem longitudinalen Träger befestigtes, und zusammen mit dem länglichen Träger in das zu befüllende Rohr einführbares Falldämpferelement, **dadurch gekennzeichnet, dass** das Falldämpferelement ein für die Schüttgutpartikel durchlässiges, flexibles, insbesondere irreguläres Netzgebilde trägt, das aus einer Vielzahl von Schlaufen, gebildet wird, wobei sich vorzugsweise wenigstens zwei Netzelemente des gleichen Falldämpferelements in ihrer vertikalen Projektion überschneiden.

"Durchlässig" im Sinne der Erfindung ist ein Netzgebilde, wenn die Schüttgutpartikel während des Befüllens des Rohres durch das Netzgebilde nicht ungehindert hindurchtreten, sondern mit wenigstens einem Netzelement des Netzgebildes in Kontakt gelangen und auf diese Weise ihre Fallgeschwindigkeit reduziert wird.

Insbesondere ist dabei das Netzgebilde so ausgestaltet, dass es vor Einführen in das Rohr einen maximalen radialen Durchmesser dₘₐₓ aufweist, der etwa dem Rohr-Innendurchmesser d_{I} ± 20 % entspricht. Beispielsweise kann dₘₐₓ = d_{I} + 15 % bis d_{I} -15 %, oder d_{I} + 5 % bis d_{I} -5 % sein. Meist ist dₘₐₓ = d_{I} + 2 % bis d_{I} - 5 % oder d_{I} ± 0 % bis d_{I} - 2 %. Typische Rohr-Innendurchmesser d_{I} von erfindungsgemäß befüllbaren Rohren liegen im Bereich von 70 bis 300 mm oder 100 bis 200 mm.

Unter einem "Netzgebilde" im Sinne der Erfindung ist dabei eine radiale "geschlossene" Anordnung einzelner Netzelemente am Falldämpferelement zu verstehen. Darüber hinaus zeichnet sich ein erfindungsgemäßes Netzgebilde dadurch aus, dass sich einzelne Schlaufen in ihrer vertikalen Projektion, d.h. in der Draufsicht auf das(die) Falldämpferelement(e) (bzw. in der entlang der Längsachse des Rohres verlaufenden Befüllungsrichtung) kreuzen oder überschneiden . Diese Überschneidungen liegen dabei bereits vor Einbringen des Falldämpferelements in das zu befüllende Rohr vor. Bei "geschlossener" Anordnung sind die Netzelemente beidseitig befestigt und einzelne Elemente greifen zusätzlich gegebenenfalls ineinander. Die Netzelemente sind zudem radial so verteilt, dass der vertikale Durchgang der Schüttgutpartikel durch das Falldämpferelement durch ein- oder mehrfachen Kontakt der Schüttgutpartikel mit einzelnen Netzelementen behindert, d.h. in seiner Fallgeschwindigkeit gebremst, wird.

Art und Weise der Befestigung einzelner Netzelemente am Falldämpfer kann auf beliebigem Weg erfolgen, wobei eine Austauschbarkeit defekter Elemente bevorzugt gewährleistet sein sollte. So können einzelne Elemente mit dem Korpus des Falldämpferelements verlötet oder verklebt sein. Vorteilhaft können auch Vertiefungen im Korpus vorgesehen sein, in denen die Elemente befestigt sind. Zur weiteren Verbesserung der Flexibilität der einzelnen Elemente können diese Federgelenke aufweisen, z.B. hergestellt durch spiralförmiges Verdrillen eines Endes eines faserförmigen Netzelements, und über diese Federgelenke mit dem Korpus des Falldämpferelements verbunden, wie z.B. verklebt, sein.

Auch die Anzahl der Netzelemente je Falldämpferelement kann über den beanspruchten Bereich schwanken. Sie ist aber so gewählt, dass die Schüttgutpartikel am freien Durchtreten durch das Falldämpferelement behindert werden. In Abhängigkeit von der Schüttgutpartikelgröße kann daher die geeignete Anzahl von Netzelementen durch wenige Vorversuche bestimmt werden.

Durch irreguläre Anordnung der Netzelemente kann die falldämpfende Wirkung des Netzgebildes weiter verbessert werden. Dabei ist das Netzgebilde in seiner vertikalen Projektion, d.h. in der Draufsicht, asymmetrisch ausgebildet.

Weiterhin kann das Netzgebilde in seiner lateralen Projektion, d.h. in seiner Seitenansicht, ebenfalls asymmetrisch sein.

Die Netzelemente sind insbesondere radial und longitudinal (d.h. axial und in Längsrichtung) verteilt am Falldämpferelement angeordnet, insbesondere dort lösbar befestigt, so dass ein Ersetzen einzelner Elemente im Falle eines Defektes erleichtert wird.

Um ein erfindungsgemäßes Netzgebilde auszubilden, können die Netzelemente in unterschiedlicher Form vorliegen. Die Netzelemente können beispielsweise als Schlaufen ausgebildet sein, deren beide Enden am Falldämpferelement lösbar befestigt sind. Innerhalb eines Netzgebildes können einzelne, wie z.B. wenigstens zwei, benachbarte Schlaufen ineinander greifen.

Die am Falldämpferelement befestigten Schlaufen, können entweder vertikal zum Träger orientiert sein, oder aber in und/oder gegen die Fallrichtung des Schüttguts geneigt sein.

Die Schlaufen eines Netzgebildes können gleiche oder verschiedene Länge aufweisen.

Beispielsweise weisen einzelne der Schlaufen eines Falldämpferelements, insbesondere deren Minderzahl, d.h. weniger als 50%, wie z.B. 40, 30, 20 oder 1 bis 10%, eine Hauptachsenlänge auf, die größer als der Rohrinnenradius ist. Beispielsweise kann deren Länge um 1 bis 50 %, oder 2 bis 10 % oder 3 bis 5 % größer als der Rohrinnenradius sein.

Der verbleibende Teil der Schlaufen weist eine Länge, bzw. Hauptachsenlänge auf, die dem Rohrinnenradius entspricht oder um 1 bis 50%, wie z.B. 2 bis 20% oder 5 bis 10% kleiner ist. Die am besten geeignete Ausgestaltung ist vom Fachmann einfach zu ermitteln. Einerseits wird er dabei darauf achten, dass das Einführen der Vorrichtung in das Rohr nicht unnötig erschwert wird und andererseits die falldämpfende Wirkung optimal ausgenutzt werden kann. Ein erleichtertes Einführen der Vorrichtung in das Rohr und eine Straffung des Trägers kann z.B. auch dadurch erreicht werden, dass man am unteren Ende des Trägers ein geeignetes Gewicht befestigt, das die Träger nach Unten in das Rohr zieht.

Das erfindungsgemäße Netzgebilde kann aus verschiedenen geeigneten elastischen Materialien, wie z.B. Kunststoff oder Stahl, gefertigt sein. Rostfreier Stahl ist dabei besonders geeignet. Die Anzahl der Netzelemente je Falldämpferelement, sowie die Geometrie der Netzelemente, wie Länge, Krümmung und Durchmesser der Schlaufen, in Abhängigkeit von Größe, Gewicht und Fallgeschwindigkeit der Schüttgutpartikel können den Erfordernissen der jeweils vorzunehmenden Rohrbefüllung angepasst werden. Beispielsweise umfasst ein Falldämpferelement 3 bis 20, wie insbesondere 6 bis 12 oder 4 bis 8, Netzelemente. Beispielsweise können die Netzelemente einen Durchmesser von 0,3 bis 1,5 mm, insbesondere 0,4 bis 0,8 oder 0,5 bis 0,6 mm aufweisen. Der Durchmesser kann dabei über die Gesamtlänge gleich bleiben oder variieren. Beispielsweise können die einzelnen Falldämpferelemente zum Träger hin einen größeren Durchmesser und damit eine höhere Stabilität und geringere Elastizität als im Bereich der distalen Enden aufweisen. Beispielsweise können pro Länaeneinheit des Falldämpferelements in Zentimeter 0.5 bis 5 Netzelemente, wie z.B. 1, 2, 3, 4 Netzelemente angeordnet sein. Durch diese aufgelockerte Anordnung von elastischen Netzelementen, wird im Gegensatz zu den gemäß Stand der Technik verwendeten Vorrichtungen mit dichtem, bürstenartigem Besatz von relativ starren Borsten die Gefahr eines Partikelrückstaus und damit eines ungewollten Verstopfens des Rohres während des Befüllens wirksam verringert oder unterbunden. Damit kann bei Verwendung der erfindungsgemäßen Vorrichtung die Füllgeschwindigkeit im Vergleich zum Stand der Technik deutlich erhöht werden.

Anzahl und Ausgestaltung der Netzelemente können so gewählt werden, dass die Schüttgeschwindigkeit oder Füllleistung im Vergleich zu herkömmlichen Bürsten unter Standardbedingungen deutlich verbessert wird. So kann ein vertikales Rohr, wie z.B. ein Reformer-Rohr, beispielsweise mit einem Innendurchmesser von 100 mm und bei Verwendung von Katalysatorpartikeln mit einem Gewicht von etwa 2 bis 4 g und einem Durchmesser von etwa 15 bis 20 mm, wie z.B. 2g/16,1 mm oder 4g/19,6 mm, erfindungsgemäß mit einer Geschwindigkeit von 0,5 bis 1,5, insbesondere 0,5 bis 1,3, oder 0,8 bis 1,2 oder 0,9 bis 1,1 Minuten/Meter Rohr störungsfrei und ohne Beschädigung der Partikel befüllt werden. Mit herkömmlichen Bürsten und unter identischen Bedingungen sind dagegen maximale Füllgeschwindigkeiten von nur 1,36 bis 1,81 Minuten/Meter erreichbar.

Eine erfindungsgemäße Füllvorrichtung kann je nach Bedarf mit einer variablen Anzahl von Falldämpferelementen ausgestattet sein. Beispielsweise kann eine erfindungsgemäße Vorrichtung 1 bis 5, wie z.B. 2, 3 oder4, Falldämpferelemente pro Längeneinheit, wie z.B. pro Meter, tragen. Die Gesamtzahl der Elemente kann z.B. im Bereich von 1 bis 50 oder 1 bis 20, wie z.B. 2 bis 15 oder 5 bis 10, je Vorrichtung liegen. Die Vorrichtung kann besonders vorteilhaft modular aufgebaut sein, d.h. im Falle eines Defekts oder bei Verschleiß können einzelne Elemente ausgetauscht werden.

Jedes einzelne Falldämpferelement kann eine Länge von 5 bis 20, wie z.B. 8 bis 12 Zentimetern aufweisen und pro Zentimeter 0,5 bis 5, wie z.R. 2, 3 oder4, Schlaufen tragen.

Erfindungsgemäß ist es besonders zweckmäßig, wenn die einzelnen Falldämpferelemente ebenfalls einen modularen Aufbau besitzen, so dass einzelne Netzelemente bei Bedarf rasch ersetzt werden können. Die gelingt beispielsweise dadurch, dass das Falldämpferelement aus einer Serie, wie z.B. 2 bis 10, miteinander verschraubbarer Segmente, wie z.B. Hülsen oder Muttern mit Innengewinde, zusammengesetzt ist. Die Schlaufen, können dann mit Hilfe von an der Schlaufe ausgebildeten Ösen zwischen zwei solcher Segmenten eingesetzt, radial ausgerichtet und durch Verschrauben der Segmente fixiert werden.

Der erfindungsgemäße Träger der Füllvorrichtung ist flexibel ausgebildet und kann beispielweise eine Schnur, ein Band oder ein Seil sein. Im Allgemeinen besteht der flexible Körper aus geflochtenen, natürlichen oder synthetischen oder metallischen Fasern. Beispiele hierfür sind Seile aus Metall, wie Stahl, oder Nylon. Seile aus Edelstahl sind besonders bevorzugt.

Der Träger kann unterschiedliche Querschnitte aufweisen, hat vorzugsweise jedoch einen kreisförmigen Querschnitt. Typische Durchmesser liegen im Bereich von etwa 2 bis 10 mm, wie z.B. 3 bis 8 oder 3,5 bis 6 mm.

Eine weitere bevorzugte Ausführungsform der Vorrichtung ist so ausgebildet, dass der Träger selbst Federelemente umfasst oder aus einer Vielzahl von Federelementen gebildet wird. Diese Federelemente können beispielsweise Spiralfedern sein, die aus Metall, wie Stahl, gefertigt sind, die zwei benachbarte Falldämpferelemente federnd verbinden. Dadurch kann der Füllvorgang noch schonender durchgeführt werden. Die einzelnen Federelemente können bezüglich Geometrie und Federkraft den jeweiligen Anforderungen angepasst werden. Insbesondere größere oder schwerere Partikel werden dadurch besonders geschont.

In einer weiteren Ausgestaltung kann die Vorrichtung eine Vielzahl, wie z.B. 2 bis 5, seriell angeordneter Falldämpferelemente umfassen, die mit elastischen Verbindungsmitteln, beispielsweise Spiralfederelementen, verbunden sind, und wobei gleichzeitig ein flexibler, biegsamer Träger, wie. z.B. ein Stahlseil, mittig durch die Federelemente und die Falldämpferelemente durchgeführt ist. Dabei ist das proximale, d.h. das zuletzt in das Rohr eingeführte, Falldämpferelement oder ein nicht als Falldämpferelement ausgebildeter Anker am flexiblen Träger befestigt, während die sich darunter anschließenden Falldämpfer- und Federelemente parallel zum Träger federnd bewegbar sind. Der zentrale flexible Träger verleiht der Vorrichtung dabei zusätzliche Stabilität.

In einer weiteren bevorzugten Ausführungsform der Erfindung ist die Befüllvorrichtung, wie insbesondere deren Träger mit einer optischen oder akustischen Überwachungsvorrichtung kombiniert ist. Diese ermöglicht eine Überwachung und erforderlichenfalls Dokumentierung des Befüllvorgangs sowie die Einstellung eines im Wesentlichen konstanten Mindestabstands von unterem, distalem Falldämpferelement zur Schüttung und damit die Einstellung einer gewünschten freien Fallhöhe der Schüttgutpartikel.

Geeignete optische Überwachungsvorrichtungen die selbst nicht Gegenstand der Erfindung ist sind am distalen Ende, das in das zu befüllende Rohr eingeführt wird, mit einer optischen Linse oder einem Detektor und gegebenenfalls einer Lichtquelle oder Schallquelle ausgestattet und am proximalen Ende mit einem Monitor oder sonstigem Kontrollgerät verbunden. Außerdem können geeignete Überwachungsvorrichtungen Mittel zum Aufzeichnen des Verlaufs der Rohrbefüllung umfassen. Derartige Überwachungsvorrichtung umfassen außerdem einen flexiblen Signalleiter, wie z.B. Lichtleiter, der auch gleichzeitig als Träger für Falldämpferelemente fungieren kann. Der Leiter kann insbesondere auch anstelle des zentralen Trägers in der oben beschriebenen Ausgestaltung der erfindungsgemäßen Vorrichtung mit einer Vielzahl von Falldämpfer- und Federelementen verwendet werden, die daran lösbar befestigt sind.

Die Linse oder der Detektor der Überwachungsvorrichtung ist vorzugsweise unterhalb des untersten Falldämpferelements der Vorrichtung angeordnet, so dass eine ungehinderte Überwachung und gegebenenfalls Aufzeichnung des Füllvorgangs ermöglicht wird.

Geeignete optischen Überwachungsvorrichtungen aus Kamera, Lichtleiter (Haspel) und Aufzeichnungseinheit, wie sie z.B. zur Kontrolle vor Rohrleitungen eingesetzt werden, sind auf dem Markt erhältlich und können für die Bedürfnisse der vorliegenden Erfindung mit einem oder mehreren wie oben beschrieben Falldämpferelementen ausgerüstet werden. Beispielsweise werden geeignete Überwachungsvorrichtungen von der Firma Kummert Inspektionssysteme e.K., Gerolzhofen, Deutschland in verschiedenen Ausführungen vertrieben (wie z.B. Kamera K-35, Durchmesser des Kamerakopfs 35 mm; Haspel H-S 30; Durchmesser 6 mm). Derartige Vorrichtungen umfassen als Kamera einen Farb-CCD Sensor und als Lichtquelle im Kamerakopf angeordnete LEDs. Der Lichtleiter wird von Kunststoff-ummantelten Glasfaserkabeln mit einem Außendurchmesser von etwa 5 bis 8 Millimetern gebildet, an welchen die erfindungsgemäßen Falldämpferelemente in der oben beschriebenen Weise befestigbar sind.

Weiterhin kann eine erfindungsgemäße Vorrichtung trichterförmige Einfüllhilfen umfassen. Diese können auf das zu befüllende Rohr aufgesetzt werden. Beispielsweise umfassen geeignete Einfüllhilfen einen Rohrstutzen dessen Außendurchmesser dem Innendurchmesser des zu befüllenden Rohres entspricht. Seitlich angebracht kann ein Einfülltrichter sein, in den das Schüttgut eingefüllt wird und von dort über den Rohrstutzen in das zu befüllende Rohr gelangt. Zusätzlich kann im Boden des Trichters eine Förderhilfe, wie z.B. eine Förderschnecke oder ein Förderrad, vorgesehen sein, welche eine konstante Menge des Schüttguts in das Rohr befördert.

Ein weiterer Gegenstand der Erfindung betrifft die Verwendung einer Befüllvorrichtung gemäß obiger Beschreibung zum Befüllen eines Rohrreaktors mit Katalysatorpartikeln.

Die erfindungsgemäße Vorrichtung ist für das Befüllen unterschiedlicher Reaktortypen geeignet. Beispielsweise können insbesondere Reformer genannt werden.

Die erfindungsgemäße Vorrichtung ist außerdem für das Befüllen von Rohrreaktoren mit unterschiedlichst ausgebildeten Katalysatorteilchen geeignet. So können Vollkatalysator-Partikel oder geträgerte Katalysatoren, sogenannte Schalenkatalysatoren, besonders schonend verarbeitet werden. Die Partikel können in verschiedenen geometrischen Formen, wie z.B. in Form von Kugeln, Ringen, Zylindern, Hohlzylindern, Würfeln oder Quadern, vorliegen. Typischerweise liegt das Partikelgewicht im Bereich von etwa 1 bis 10, insbesondere 2 bis 4 Gramm.

Insbesondere sind die erfindungsgemäßen Vorrichtungen zum Befüllen von Rohrreaktoren mit einem Innendurchmesser von 70 bis 300 mm geeignet.

Gegenstand der Erfindung ist weiterhin ein Verfahren zur Befüllung einer vorzugsweise vertikal angeordneten Röhre mit partikelförmigem Material, **dadurch gekennzeichnet, dass** man die Vorrichtung gemäß obiger Definition über das obere Ende des Rohres so weit einführt dass das unterste Falldämpferelement den Rohrboden gerade nicht berührt, und die Vorrichtung entgegen der Fallrichtung der Partikel während der Befüllung aus dem Rohr entfernt. Dabei kann die Vorrichtung kontinuierlich oder schrittweise aus dem Rohr entfernt werden.

Um das Einführen der Vorrichtung in das Rohr zu erleichtern, kann es gegebenenfalls zweckmäßig sein, am unteren Ende, d.h. unterhalb des zuerst eingeführten Falldämpferelements, ein Zuggewicht aus Stahl oder Hartgummi am Träger vorzusehen. Dieses kann beispielsweise zylinderförmig ausgebildet sein und ein Verhältnis von Durchmesser zu Länge von etwa 2:4 bis 1:10 aufweisen, wie z.B. eine Länge von 100 mm und einen Durchmesser von 20 bis 25 mm. Das Gewicht kann beispielsweise im Bereich von 50 bis 500 Gramm oder 100 bis 250 Gramm liegen.

Wird der Befüllvorhang z.B. optisch überwacht, so kann man diesen unterbrechen, wenn Bepackung des Rohres mit Füllgut ungleichmäßig erfolgt.

In einer weiteren Ausgestaltung des erfindungsgemäßen Verfahrens besteht die Möglichkeit eventuell anfallenden staubförmigen Abrieb der Katalysatorpartikel aus dem Rohr durch Einblasen von Luft zu entfernen. Dazu kann man gleichzeitig mit der Füllvorrichtung eine Druckluftleitung einführen, die auf das Partikelbett Luft bläst. Staubförmige Bestandteile werden dadurch aufgewirbelt und mit dem Luftstrom entgegen der Füllrichtung aus dem Rohr ausgetragen. Geeignete Vorrichtungen zum Einleiten von Luft und gegebenenfalls um Absaugen von Staub sind dem Fachmann an sich bekannt.

Ein letzter Gegenstand der Erfindung betrifft eine Füllvorrichtung mit optischer Überwachungsvorrichtung, umfassend einen optischen Lichtleiter, an dessen Eingang eine optische Sammellinse gegebenenfalls zusammen mit einer Lichtquelle ausgebildet ist, und dessen Ausgang mit einem Empfänger verbunden ist, wobei die Vorrichtung zusätzlich wenigstens ein Falldämpferelement gemäß obiger Definition trägt.

Die vorliegende Erfindung wird nunmehr unter Bezugnahme auf beiliegende, spezielle nichtlimitierende Ausführungsformen zeigende Figuren näher beschrieben

Figur 1 zeigt eine Füllvorrichtung (1) während der Befüllung eines Rohres (6) mit Schüttgutpartikeln (P), welche auf dem Rohrboden (61) aufgeschüttet werden. Insbesondere umfasst die Vorrichtung (1)drei erfindungsgemäße Falldämpferelemente (3), welche an einem Träger (2), wie einem biegsamen Stahlseil mit einem Durchmesser von 2 bis 8 mm, wie z.B. 3,5 bis 6 mm, befestigt sind. Jedes Falldämpferelement (3) trägt eine Vielzahl von irregulär angeordneten, gekrümmten Netzelementen (40), welche das (nicht erfindungsgemäße) Netzgebilde (4) ausbilden. Weiterhin umfasst die Füllvorrichtung (1) eine in das obere, offenen Ende des Rohres (6) eingesetzte Einfüllhilfe (7), bestehend aus einem Rohrstutzen (70), einer als Anschlag oder Auflage dienenden, umlaufenden Krause bzw. einem Flansch (73) und einem oberhalb der Krause (73) mit dem Rohrstutzen (70) über eine Zuleitung (74) verbundene Trichter (71) mit eingesetzter schneckenförmiger Förderhilfe (72). In einer Abwandlung dieser Vorrichtung kann der Träger (2) durch einen hier ebenfalls beschriebenen Signalleiter, wie z.B. einem Lichtleiter (50) einer optischen Überwachungsvorrichtung ersetzt sein, an dem einzelne Falldämpferelemente, wie z.B. solche die zwei hierin beschriebene, miteinander verschraubbare Korpushälften (360,361) (vgl. z.B. Figur 8) umfassen, lösbar befestigt sind.

Figur 2 zeigt die Seitenansicht eines liegend dargestellten, Falldämpferelements (3). Das Falldämpferelement (3) umfasst zwei Ringschrauben (30) zur Befestigung des Falldämpferelements (3) am Träger (2). Die Ringschrauben umfassen einen Gewindehals (32) (in Figur 2 nicht dargestellt) mit einer umlaufenden, als Anschlag dienenden Krause (31). Der Korpus (33) des Falldämpferelements (3) umfasst drei Segmente, welche von zwei seitlichen über den Gewindehals (32) der Schrauben (30) bis zu deren Anschlag (31) geschobene Hülsen (34) und einer zentralen Kupplungshülse (35) mit Innengewinde gebildet werden. Die Hülsen (34) und die Kupplungshülse (35) weisen etwa gleiche Außendurchmesser auf. Der Gewindehals (32) der Schrauben (30) ist dabei länger als die Hülse (34), so dass das Außengewinde des Gewindehalses (32) in das Innengewinde der Kupplungshülse (35) eingreifen kann. Die Kupplungshülse (35) dient zur Verschraubung der beiden Ringschrauben (30). Zwischen Anschlag (31) und Hülse (34) sowie zwischen Hülse (34) und Kupplung (35) sind radial gekrümmte Fasern (400) des (nicht erfindungsgemäßen) Netzgebildes (4) eingesetzt, welche nach radialer Ausrichtung durch Verschrauben der beiden Ringschrauben (30) mit der Kupplung (35) fixiert werden. Mehrere solcher Falldämpferelemente können unter Verwendung von Stahlseilen mit Hilfe herkömmlicher Seilklemmen seriell verknüpft werden.

In einer nicht dargestellten Abwandlung des Falldämpferelements (3) aus Figur 2 können die Hülsen (34) durch eine Vielzahl, wie z.B. 2 bis 5, mit den Ringschrauben verschraubbaren Muttern, wie z.B. handelsüblichen Sechskantmuttern mit Innengewinde, ersetzt sein. Je Ringschraube können so viele Muttern aufgeschraubt werden, dass ein sicheres Verschrauben mit der zentralen Kupplung (35) noch möglich ist. Zwischen zwei benachbarten Muttern sind auf diese Weise die radial gekrümmten Fasern fest verschraubbar.

Figur 3 zeigt in der Draufsicht eines nicht-erfindungsgemäßen Falldämpferelements (3) entsprechend Figur 2 mit radial angeordneten, in gleicher Richtung aber unterschiedlich stark gekrümmten Fasern (400) unterschiedlicher Länge, welche eine asymmetrisches offenes Netzgebilde (4) ausbilden, dessen maximaler Durchmesser d dem Innendurchmesser dₗ des zu befüllenden Rohres (6) (als Kreis angedeutet) entspricht. Die Fasern (400) sind dabei am Korpus (33) des Falldämpferelements (3) radial verteilt, irregulär angeordnet.

Figur 4 zeigt in der Draufsicht eine alternative Ausgestaltung eines nicht-erfindungsgemäßen Falldämpferelements (3) aus Figur 2 mit radial am Korpus (33) angeordneten, in verschiedenen Richtungen und unterschiedlich stark gekrümmten Fasern (400), welche eine asymmetrisches, offenes Netzgebilde (4) ausbilden.

Figur 5a zeigt in der Draufsicht eine weitere alternative Ausgestaltung eines Falldämpferelements (3) aus Figur 2 mit radial am Korpus (33) angeordneten Schlaufen (402) unterschiedlicher Länge, welche ein asymmetrisches, geschlossenes Netzgebilde (4) ausbilden. Figur 5b zeigt in der Draufsicht eine weitere alternative Ausgestaltung eines nicht-erfindungsgemäßen Falldämpferelements (3) aus Figur 5a welches von einem einstückigen, elastischen Faden (404) gebildet wird, der schlaufenartige Segmente ausbildet, indem er abschnittsweise am Korpus (33), z.B. über von dem Faden ausgebildete Ösen, befestigt ist. Auch hier wird ein asymmetrisches, geschlossenes Netzgebilde (4) ausgebildet.

Figur 6 zeigt verschiedene Ausgestaltungen von Netzelementen (40), und zwar a) als radial gekrümmte Einzelfaser (400), b) als radial gekrümmte S-förmige Doppelfasern (401); c) als Schlaufe (402). Jedes dieser Netzelemente ist aus einem Stück geformt und bildet eine zentrale Öse (403) aus, welche der Befestigung am Falldämpferelement (3) dient. Vorzugsweise wird durch die Öse (403) der Gewindehals (32) der Ringschraube (30) (vgl. Figur 2) hindurchgeführt und in der oben beschriebenen Weise das Netzelement fixiert. Die Figuren 6 d), e) und f) zeigen Netzelemente, welche über Federgelenke (407) am Falldämpferelement befestigbar sind, und zwar d) eine Faser (405), e) eine Schlaufe (406) mit zwei endständigen Federgelenken und f) eine Zackenfaser (408). Die Netzelemente gemäß Figur 6a), 6b), 6d) und 6f) sind nicht Gegenstand der Erfindung.

Figur 7 zeigt in schematischer Darstellung eine weitere Ausgestaltung einer in ein Rohr (6) eingesetzte Füllvorrichtung (1a), umfassend neben der oben bereits beschriebenen Einfüllhilfe (7) einen als Träger dienenden, flexiblen Lichtleiter (50), außerhalb des Rohres (6) verbunden mit einem Monitor (53) und am gegenüberliegenden im Rohr (6) befindlichen Ende ausgestattet mit einer Lichtquelle (52) und einer Linse (51). Die Vorrichtung umfasst drei nicht-erfindungsgemäße Falldämpferelemente (3a) welche durch Spiralfedern (8) miteinander federnd verbunden sind. Das oberste der Falldämpferelemente (3a) ist mit Hilfe einer weiteren Spiralfeder (8) an einem an Lichtleiter angebrachten und dort fixierten Anker (9) verbunden. Die Falldämpferelemente (3a) sind so ausgebildet, dass sie eine zentrale Bohrung aufweisen deren Innendurchmesser größer ist als der Außendurchmesser des Lichtleiters (50). Damit können sich die Falldämpferelemente (3a) parallel zum Lichtleiter (50) während des Füllvorgangs innerhalb des Rohres (6) federnd auf und ab bewegen.

Figur 8 zeigt eine weitere Ausgestaltung erfindungsgemäßer Falldämpferelemente. Die Netzelemente, hier Schlaufen (406) mit Federgelenken (407), werden von einem zweiteiligen hülsenförmigen metallischen Korpus, bestehend aus zwei miteinander verschraubbaren Korpushälften (360,361 ) getragen. Die Federgelenke sind dabei in seitliche, radial über den Umfang der Korpushälften verteilte Vertiefungen (362) eingesetzt und dort z.B. verklebt. Der Innenradius des hülsenförmigen Korpus ist an den Durchmesser des Trägers, hier des Lichtleiters (50), wie z.B. eines Lichtleiters einer in Figur 7 dargestellten optischen Überwachungsvorrichtung, angepasst, so dass bei Verschrauben der beiden Korpushälften, der Korpus am Lichtleiter (50) formschlüssig fixiert wird. Figur 8a) zeigt die perspektivische Ansicht der Anordnung vor dem Verschrauben der beiden Korpushälften (360, 361) mit Hilfe von Schrauben (363). Diese sitzen in Bohrungen (365) der einen Korpushälfte (361) und werden mit den Gewindebohrungen (364) der zweiten Korpushälfte (360) verschraubt. Figur 8b) zeigt einen Querschnitt durch den verschraubten Korpus. Aus Gründen der Übersichtlichkeit ist nur ein Netzelement (406) dargestellt. Zur Ausbildung eines erfindungsgemäßen Netzgebildes sind weitere Netzelemente (406) in dafür vorgesehene radial und longitudinal über die Korpushälften verteilte Vertiefungen (362) einzusetzen, vorzugsweise in der Art, dass sich einzelne Netzelemente (406) in der Projektion (Draufsicht) überschneiden. Anstelle der Schlaufen (406) können ebenso andere Netzelemente, wie z.B. Fasern (405) oder Zackenfasern (406), verwendet werden.

Figur 9 zeigt weitere Ausgestaltungen von Falldämpferelementen. Ein einstückiger, metallischer Korpus (330) ist jeweils an seinem oberen und unteren Ende durchbohrt. Über diese Bohrungen (331) ist er mit dem (nicht dargestellten) Träger, wie z.B. einem Stahlseil, verbindbar. Über den gesamten Umfang des mittleren Abschnittes des Korpus (330) sind mehrere Vertiefungen (332) vorgesehen, welche so ausgebildet sind, dass darin die Netzelemente fixierbar sind. Insbesondere sind hier Vertiefungen (332) vorgesehen, welche die Federgelenke (407) von verschiedenen Falldämpferelemente aufnehmen können. Nach dem Einsetzen der Federgelenke (407) ragen diese noch soweit aus den Vertiefungen (332), dass eine Federwirkung bei Belastung, d.h. Aufprall von Partikeln während der Befüllung, gewährleistet ist. Figur 9a) zeigt ein aus vier radial über den Umfang des Korpus (330) verteilten Fasern (405) gebildetes Falldämpferelement, wobei jedes distale Faserende mit Hilfe einer Verbindung (409), wie z.B. einer aufgesteckten und zusammengeklemmten Metallhülse, mit einer benachbarten Faser (405) in deren Mittelabschnitt verbunden ist. Das Netzgebilde weist in der Draufsicht somit einen in etwa kreisförmigen Umfang auf. Figur 9b) zeigt ein aus vier Schlaufen (406) gebildetes Falldämpferelement, wobei beide Enden jeder der Schlaufen als Federgelenke (407) ausgebildet sind und in einer von insgesamt acht radial und longitudinal am Korpus (330) verteilten Vertiefungen (332) eingesetzt sind. In der Draufsicht können sich einzelne Schlaufen (406) überschneiden. Figur 9c) zeigt ein aus vier Zackenfasern (408) gebildetes Falldämpferelement, wobei jede der Fasern über ein Federgelenk (407) in einer von mehreren radial und longitudinal am Korpus (330) verteilten Vertiefungen (332) eingesetzt ist. Die Zackenfasern zweier benachbarter Falldämpferelemente können sich dabei in der Draufsicht überschneiden. Die in Figur 9 dargestellten Falldämpferelemente können in einer weiteren erfindungsgemäßen Abwandlung in analoger Weise unter Verwendung eines zweiteiligen, z.B. verschraubbaren Korpus analog Figur 8, bereit gestellt werden. Die Figuren 9a) und 9c) zeigen keine erfindungsgemäßen Falldämpferelemente.

Weitere Abwandlungen der hier beschriebenen konkreten Ausführungsformen kann der Fachmann unter Befolgung der erfindungsgemäßen technischen Lehre bereitstellen.

### Bezugszeichenliste

- 1, 1a: Vorrichtung zum Befüllen
- 2: Träger
- 3, 3a: Falldämpferelement
- 4: Netzgebilde
- 5: optische Überwachungsvorrichtung
- 6: Rohr
- 7: Einfüllhilfe
- 8: Feder
- 9: Anker

- 31: Anschlag
- 32: Gewindehals
- 33: Korpus
- 34: Hülse
- 35: Kupplungshülse

- 40: Netzelement

- 50: Lichtleiter
- 51: Linse
- 52: Lichtquelle
- 53: Monitor

- 61: Rohrboden

- 70: Rohrstutzen
- 71: Trichter
- 72: Förderhilfe
- 73: Krause
- 74: Zuleitung

- 330: Korpus
- 331: Bohrung
- 332: Aufnahme

- 360: Korpushälfte
- 361: Korpushälfte
- 362: Vertiefungen
- 363: Schraube
- 364: Gewindebohrung
- 365: Bohrung

- 400: Faser
- 401: Doppelfaser
- 402: Schlaufe
- 403: Öse
- 404: Faden
- 405: Faser
- 406: Schlaufe
- 407: Federgelenk
- 408: Zackenfaser
- 409: Verbindung

## Patentansprüche

1. Vorrichtung (1) zum Befüllen eines Rohrreaktors mit einem Rohrinnendurchmesser im Bereich von 70 bis 300 mm mit partikelförmigem Schüttgut, umfassend wenigstens ein an einem longitudinalen flexiblen Träger (2) befestigtes, und zusammen mit dem Träger (2) in das zu befüllende Rohr einführbares Falldämpferelement (3), **dadurch gekennzeichnet, dass** das Falldämpferelement (3) ein für die Schüttgutpartikel durchlässiges Netzgebilde (4) trägt, wobei das Netzgebilde (4) von einer Vielzahl elastischer Netzelemente (40) gebildet wird, wobei
die Netzelemente (40) radial und longitudinal verteilt am Korpus (33) des Falldämpferelements (3) angeordnet sind,
sich wenigstens zwei Netzelemente (40) in ihrer vertikalen Projektion überschneiden, und
das Falldämpferelement (3) eine Länge von 5 bis 20 Zentimetern aufweist und pro Zentimeter 0,5 bis 5 Netzelemente (40) trägt, wobei die Gesamtzahl der Netzelemente (40) je Falldämpferelement (3) 3 bis 20 ist, und wobei die Netzelemente (40) Schlaufen sind, deren beide Enden am Falldämpferelement (3) befestigt sind.

2. Vorrichtung nach Anspruch 1, wobei das Netzgebilde (4) einen maximalen radialen Durchmesser d aufweist, der etwa dem Rohr-Innendurchmesser d_{I} ± 20 % entspricht.

3. Vorrichtung nach einem der vorhergehenden Ansprüche, **dadurch gekennzeichnet, dass** das Netzgebilde (4) in seiner vertikalen Projektion asymmetrisch ausgebildet ist.

4. Vorrichtung nach einem der vorhergehenden Ansprüche, **dadurch gekennzeichnet, dass** das Netzgebilde (4) in seiner lateralen Projektion asymmetrisch ist.

5. Vorrichtung nach Anspruch 1, wobei wenigstens zwei Schlaufen (401) ineinander greifen.

6. Vorrichtung nach einem der vorhergehenden Ansprüche, **dadurch gekennzeichnet, dass** das Netzgebilde (4) aus rostfreiem Stahl gefertigt ist.

7. Vorrichtung nach einem der vorhergehenden Ansprüche, wobei der Träger (2) Federelemente (8) umfasst oder aus einer Vielzahl von Federelementen (8) gebildet wird.

8. Vorrichtung nach Anspruch 7, wobei das Federelement (8) zwei benachbarte Falldämpferelemente (3) federnd verbindet.

9. Vorrichtung nach einem der vorhergehenden Ansprüche, **dadurch gekennzeichnet, dass** der Träger (2) mit einer optischen Überwachungsvorrichtung (5) kombiniert ist.

10. Vorrichtung nach Anspruch 9, **dadurch gekennzeichnet, dass** die optische Überwachungsvorrichtung (5) am distalen Ende mit einer Linse/Detektor (51) und gegebenenfalls einer Lichtquelle (52) und am proximalen Ende mit einem Monitor (53) verbunden ist.

11. Vorrichtung nach Anspruch 10, wobei die Überwachungsvorrichtung einen flexiblen Lichtleiter (50) umfasst.

12. Vorrichtung nach Anspruch 11, wobei der Lichtleiter (50) gleichzeitig Träger (2) der Falldämpferelemente (3) ist.

13. Vorrichtung nach einem der Ansprüche 10 bis 12, wobei die Linse (51) unterhalb des untersten Falldämpferelements (3) der Vorrichtung (1) angeordnet ist.

14. Verwendung einer Vorrichtung nach einem der vorhergehenden Ansprüche zum Befüllen eines Rohrreaktors mit Katalysatorpartikeln.

15. Verwendung nach Anspruch 14, **dadurch gekennzeichnet, dass** der Rohrreaktor einen Innendurchmesser von 70 bis 300 mm aufweist.

16. Verfahren zur Befüllung einer vertikal angeordneten Röhre mit partikelförmigem Material, **dadurch gekennzeichnet, dass** man die Vorrichtung (1) nach einem der Ansprüche 1 bis 13, über das obere Ende der Röhre so weit einführt dass das unterste Falldämpferelement (3) den Röhrenboden nicht beführt, und die Vorrichtung entgegen der Fallrichtung der Partikel während der Befüllung aus der Röhre entfernt.

17. Verfahren nach Anspruch 16, **dadurch gekennzeichnet, dass** Vorrichtung kontinuierlich oder schrittweise aus der Röhre entfernt wird.

18. Verfahren nach einem der Ansprüche 16 und 17, **dadurch gekennzeichnet, dass** man den Füllvorgang unterbricht, wenn Bepackung ungleichmäßig erfolgt ist.

## Claims

1. Device (1) for filling a tube reactor having an internal tube diameter in the range of 70 to 300 mm with particulate bulk material, comprising at least one fall arrester element (3) which is fixed to a longitudinal flexible support (2) and can be inserted together with the support (2) into the tube to be filled, **characterized in that** the fall arrester element (3) carries a net formation (4), which is permeable for the bulk material particles, wherein the net formation (4) is formed by a large number of elastic net elements (40), wherein
the net elements (40) are arranged on the body (33) of the fall arrester element (3) such that they are distributed radially and longitudinally,
at least two net elements (40) intersect in their vertical projection, and
the fall arrester element (3) has a length of 5 to 20 centimetres and carries 0.5 to 5 net elements (40) per centimetre, wherein the total number of net elements (40) per fall arrester element (3) is 3 to 20, and wherein the net elements (40) are loops, both ends of which are fixed to the fall arrester element (3).

2. Device according to Claim 1, wherein the net formation (4) has a maximum radial diameter d which corresponds approximately to the internal tube diameter d_{I} ± 20%.

3. Device according to one of the preceding claims, **characterized in that** the net formation (4) is formed asymmetrically in its vertical projection.

4. Device according to one of the preceding claims, **characterized in that** the net formation (4) is formed asymmetrically in its lateral projection.

5. Device according to Claim 1, wherein at least two loops (401) intertwine.

6. Device according to one of the preceding claims, **characterized in that** the net formation (4) is made of stainless steel.

7. Device according to one of the preceding claims, wherein the support (2) comprises spring elements (8) or is formed from a plurality of spring elements (8).

8. Device according to Claim 7, wherein the spring element (8) resiliently connects two adjacent fall arrester elements (3).

9. Device according to one of the preceding claims, **characterized in that** the support (2) is combined with an optical monitoring device (5).

10. Device according to Claim 9, **characterized in that** the optical monitoring device (5) is connected at the distal end to a lens/detector (51) and, if appropriate, to a light source (52) and at the proximal end to a monitor (53).

11. Device according to Claim 10, wherein the monitoring device comprises a flexible optical waveguide (50).

12. Device according to Claim 11, wherein the optical waveguide (50) is at the same time support (2) of the fall arrester elements (3).

13. Device according to one of Claims 10 to 12, wherein the lens (51) is arranged below the lowermost fall arrester element (3) of the device (1).

14. Use of a device according to one of the preceding claims for filling a tube reactor with catalyst particles.

15. Use according to Claim 14, **characterized in that** the tube reactor has an internal diameter of 70 to 300 mm.

16. Method for filling a vertically arranged tube with particulate material, **characterized in that** the device (1) according to one of Claims 1 to 13 is inserted via the top end of the tube so far that the lowermost fall arrester element (3) does not touch the tube bottom, and the device is removed from the tube during filling opposite the falling direction of the particles.

17. Method according to Claim 16, **characterized in that** the device is removed from the tube continuously or in steps.

18. Method according to one of Claims 16 and 17, **characterized in that** the filling operation is interrupted if loading is effected unevenly.

## Revendications

1. Dispositif (1) pour remplir un réacteur tubulaire avec un diamètre intérieur de tube de l'ordre de 70 à 300 mm avec un produit en vrac sous forme de particules, comprenant au moins un élément amortisseur à gravitation (3) fixé sur un support longitudinal flexible (2) et susceptible d'être introduit, ensemble avec le support (2) dans le tube à remplir, **caractérisé en ce que** l'élément amortisseur à gravitation (3) porte une structure en filet (4) perméable aux particules de produit en vrac, la structure en filet (4) étant formée par une pluralité d'éléments en filet élastiques (40),
les éléments en filet (40) étant disposés en étant distribués en direction radiale et longitudinale sur le corps (33) de l'élément amortisseur à gravitation (3),
au moins deux éléments en filet (40) se recoupant dans leur projection verticale et l'élément amortisseur à gravitation (3) présentant une longueur de 5 à 20 centimètres et portant de 0,5 à 5 éléments en filet (40) par centimètre, le nombre total des éléments en filet (40) par élément amortisseur à gravitation (3) étant de 3 à 20 et les éléments en filet (40) étant des boucles dont les deux extrémités sont fixées sur l'élément amortisseur à gravitation (3).

2. Dispositif selon la revendication 1, la structure en filet (4) présentant un diamètre radial maximum d qui correspond approximativement au diamètre intérieur de tube dᵢ ± 20 %.

3. Dispositif selon l'une quelconque des revendications précédentes, **caractérisé en ce que** la structure en filet (4) est réalisée sous forme asymétrique dans sa projection verticale.

4. Dispositif selon l'une quelconque des revendications précédentes, **caractérisé en ce que** la structure en filet (4) est asymétrique dans sa projection latérale.

5. Dispositif selon la revendication 1, au moins deux boucles (401) s'engageant l'une dans l'autre.

6. Dispositif selon l'une quelconque des revendications précédentes, **caractérisé en ce que** la structure en filet (4) est fabriquée en acier inoxydable.

7. Dispositif selon l'une quelconque des revendications précédentes, le support (2) comprenant des éléments à ressort (8) ou étant formé d'une pluralité d'éléments à ressort (8).

8. Dispositif selon la revendication 7, l'élément à ressort (8) reliant élastiquement deux éléments amortisseurs à gravitation (3).

9. Dispositif selon l'une quelconque des revendications précédentes, **caractérisé en ce que** le support (2) est combiné avec un dispositif de supervision optique (5).

10. Dispositif selon la revendication 9, **caractérisé en ce que** le dispositif de supervision optique (5) est relié à l'extrémité distale avec une lentille/un détecteur (51) et le cas échéant avec une source lumineuse (52) et à l'extrémité proximale avec un moniteur (53).

11. Dispositif selon la revendication 10, le dispositif de supervision comprenant un guide d'ondes optique flexible (50).

12. Dispositif selon la revendication 11, le guide d'ondes optique (50) étant simultanément le support (2) des éléments amortisseurs à gravitation (3).

13. Dispositif selon l'une quelconque des revendications 10 à 12, la lentille (51) étant disposée en dessous de l'élément amortisseur à gravitation (3) inférieur du dispositif (1).

14. Utilisation d'un dispositif selon l'une quelconque des revendications précédentes pour le remplissage d'un réacteur tubulaire avec des particules de catalyseur.

15. Utilisation selon la revendication 14, **caractérisée en ce que** le réacteur tubulaire présente un diamètre intérieur de 70 à 300 mm.

16. Procédé de remplissage d'un tube disposé à la verticale avec une matière sous forme de particules, **caractérisé en ce qu'**on introduit le dispositif (1) selon l'une quelconque des revendications 1 à 13 par-dessus l'extrémité supérieure du tube aussi loin pour que l'élément amortisseur à gravitation (3) inférieur n'entre pas en contact avec le fond du tube et **en ce qu'**on retire le dispositif du tube à l'encontre de la direction de gravitation des particules pendant le remplissage.

17. Procédé selon la revendication 16, **caractérisé en ce qu'**on retire le dispositif en continu ou par étapes du tube.

18. Procédé selon l'une quelconque des revendications 16 et 17, **caractérisé en ce qu'**on interrompt l'opération de remplissage lorsque le bourrage s'est effectué de façon irrégulière.
